# EUROPEAN PATENT SPECIFICATION

(11) **EP 1 289 563 B1**
(45) Date of publication and mention of the grant of the patent: **02.06.2010**
(21) Application number: 01941404.4
(22) Date of filing: 18.06.2001
(51) Int. Cl.: A61M 1/36

(54) **METHOD FOR CONDITIONING AN AVIDIN OR STREPTAVIDIN COLUMN MATRIX IN AN EXTRACORPOREAL DEVICE**
METHODE ZU DER KONDITIONIERUNG EINER SAÜLE MIT AVIDIN ODER STREPTAVIDIN MATRIX IN EINER VORRICHTUNG AUSSERHALB DES KÖRPERS
MÉTHODE DE CONDITIONNEMENT D'UNE COLONNE À MATRICE AVIDINE OU STREPTAVIDINE DANS UN DISPOSITIF EXTRACORPOREL

(30) Priority: 16.06.2000 SE 0002287; 07.07.2000 US 216625 P
(43) Date of publication of application: 12.03.2003
(73) Proprietor: Mitra Medical Technology AB, 223 70 Lund (SE); Department of Radiation Oncology, University of Washington, Seattle, WA 98103 (US)
(72) Inventor: SANDBERG, Bengt, S-245 62 Hjärup (SE); WILBUR, Scott, Edmonds, WA 98026 (US); NILSSON, Rune, S-226 47 Lund (SE)
(74) Representative: Henriksson, Dan Ragnar Mikael
(86) International application number: PCT/SE2001/001374
(87) International publication number: WO 2001/095857

(56) References cited:
- WO-A1-92/12730
- WO-A1-97/29114
- US-A- 5 482 698
- HYUN-OCK KIM ET AL.: 'Reusability of avidin-biotinylated immunoglobulin Y columns in immunoaffinity chromatography' BIOCHEMISTRY vol. 268, 1999, pages 383 - 397, XP002905439
- FINN F.M. ET AL.: 'Isolation and characterization of hormone receptors' METH. ENZYMOL. vol. 184, 1990, pages 244 - 250, XP002905440
- DATABASE CA [Online] WILCHEK MEIR ET AL.: 'Avidin-biotin immobilization systems', XP002905462 Database accession no. 131:41599 & CASS TONY ET AL. (EDITOR) IMMOBILIZED BIOMOL. ANAL. 1998, pages 15 - 34
- JAN TENNVALL ET AL.: 'Improving tumor-to-normal-tissue ratios of antibodies by extracorporeal immunoadsorption based on the avidin-biotin concept' CANCER vol. 80, no. 12 SUPPL., 15 December 1997, pages 2411 - 2418, XP002905441
- D. SCOTT WILBUR ET AL.: 'Biotin reagents for antibody pretargeting. 2. Synthesis and in vitro evaluation of biotin dimers and trimers for cross-linking of streptavidin' BIOCONJUGATE CHEM. vol. 8, 1997, pages 819 - 832, XP002905442

## Description

### Field of the Invention

The present invention refers to a method for the conditioning of an extracorporeal device for extracorporeal extraction of toxic material from mammalian blood in connection with diagnosis or treatment of a mammalian condition or disease, in which methods reagents having the ability to extract toxic material from mammalian blood are involved, and to an extracorporeal device comprising said reagent.

### Background of the Invention

Toxic materials may be introduced into the blood of humans by accidents, from disease states, from bacterial or viral infections, or from administration of substances for treatment of certain diseases (e.g. cancer therapy). Many of these toxic materials may do considerable damage to body tissues such as kidney, liver, lung and bone marrow, and may even be fatal. It is desirable to remove such materials from the blood as quickly as possible. Although the body has natural defense mechanisms to remove unwanted toxic materials, those methods can be ineffective in many examples. Thus, certain toxic materials are best removed from the blood in an extracorporeal device. An example of such a device is the kidney dialysis machine, where toxic materials build up in the blood due to a lack of kidney function. Other medical applications where an extracorporeal device can be used include: [1] removal of radioactive materials, [2] removal of toxic levels of metals, [3] removal of toxins produced from bacteria or viruses, [4] removal of toxic levels of drugs, and [5] removal of whole cells (e.g. cancerous cells, specific hematopoietic cells - e.g. B, T, or NK cells) or removal of bacteria and viruses.

In order for the extracorporeal device to function in toxin removal, it must have a chemical entity bound on it that has a high binding affinity with the toxic material that is to be removed from blood. Rather than binding that chemical entity directly to the column matrix in the extracorporeal device, it is preferentially bound through another binding pair of molecules. This arrangement of binding is used to make the toxin binding moiety more available in the blood and to make the device more generally applicable to a variety of toxic materials. A column matrix material is used that provides a high surface area while not restricting the flow of blood through it (Nilson, R. et.al. EPC 567 514). The column matrix has a protein (avidin or streptavidin) bound to it that has a high affinity for another molecule (e.g. biotin). That column is conditioned for use in a particular medical application by conjugation of a moiety that has a high affinity for the toxic material with two molecules of biotin such that attachment to the column matrix can be readily achieved. This conditioning reagent contains two biotin moieties rather than one as this configuration provides a higher degree of stability to the column matrix.

Although, tumor-specific immunoconjugates are selectively bound to tumor cells, an initial high concentration of the cell-toxic immunoconjugate in the blood circulation is necessary to reach a sufficient high concentration of the target tissue in a patient. While required for optimal therapy of the cancer, the high concentration of cytotoxic material in the blood and other non-tumor tissues, in most cases leads to tissue damage and/or lesion formation in sensitive and vital tissues like the bone marrow. Although, bone marrow rescue is sometimes used to circumvent these potentially lethal effects, such transplantation is both extremely costly and possesses a high risk for the patient. Even in cases where the bone marrow transplantation is effective, other sensitive organs like the, liver, kidney, spleen, lung etc. can be irreparably damaged. The most effective method for preventing tissue and bone marrow damage from toxic materials in blood is to dramatically decrease the amount of that toxic material in the blood. Of course, this must be accomplished in a manner that retains the therapeutic level of toxic material in the tissue being treated (e.g. tumor).

Radiolabeled antibodies have been under investigation for therapy of cancer for several decades. Administration of radiolabeled antibodies introduces a toxic material into blood. Various methods have been proposed to rapidly clear radiolabeled antibodies from blood circulation after the tumor has accumulated a sufficient quantity of immunoconjugate to obtain a diagnosis or therapy. Some of the methods employed involve enhancement of the bodies own clearing mechanism through the formation of immune complexes. Enhanced blood clearance of radiolabeled antibodies can be obtained by using molecules that bind it, such as other monoclonal antibodies (Klibanov et. al., J. Nucl. Med. 29, 1951-1956, 1988; Marshall et al. Br. J. Cancer 69, 502-507, 1994; Sharkey et al. Bioconjugate Chem. 8, 595-604, 1997), avidin/- streptavidin (Sinitsyn et al., J. Nucl. Med. 30, 66-69,1989; Marshall et. al., Br. J. Cancer, 71, 18-24, 1995), or glycosyl containing compounds which are removed by receptors on liver cells (Ashwell and Morell, Adv. Enzymol. 41, 99-128, 1974). Still other methods involve removing the circulating immunoconjugates through extracorporeal methods (see review article by Schriber, G.J. & Kerr, D.E., Current Medical Chemistry, 1995, Vol. 2, pp 616-629).

The extracorporeal techniques used to clear a medical agent from blood circulation are particularly attractive because the toxic material is rapidly removed from the body. Application of these methods in the context of immunotherapy have been previously described (Henry CA, 1991, Vol.18, pp. 565; Hofheinze D et al., Proc. Am. Assoc. Cancer. Res. 1987 Vol. 28, pp 391; Lear J K, et al. Radiology 1991, Vol. 179, pp. 509-512; Johnson T.K. et. al. Antibody Immunoconj. Radiopharm. 1991, Vol. 4, pp. 509; Dienhart D.G., et al. Antibody Immunoconj. Radiopharm. 1991, Vol. 7, pp. 225; DeNardo G.L. et al. J. Nucl. Med. 1993, Vol. 34, pp 1020-1027; DeNardo S.J. et. al. J. Nucl. Med. 1992, Vol. 33, pp. 862-863; DeNardo G.L. J. Nucl. Med. 1992, Vol.33, pp. 863-864; and U.S. patent Number 5,474, 772; Australian Patent 638061, EPO; and EPO 90 914303.4 of Maddock.

To make the blood clearance more efficient and to enable processing of whole blood, rather than blood plasma as the above methods refer to, the medical agents (e.g. tumor specific monoclonal antibody carrying cell killing agents or radionuclides for tumor localization) have been biotinylated and cleared by an avidin based adsorbent on a column matrix. A number of publications provide data showing that this technique is both efficient and practical for the clearance of biotinylated and radionuclide labeled tumor specific antibodies (Norrgren K, et. al. Antibody Immunoconj. Radiopharm. 1991, Vol. 4, pp 54; Norrgren K, et .al. J. Nucl. Med. 1993, Vol. 34, pp. 448-454; Garkavij M, et. al. Acta Oncologica 1996, Vol. 53, pp.309-312; Garkavij M, et. al. J. Nucl. Med. 1997, Vol.38, pp.895-901. These techniques are also described in U.S. Patent application No. 08/090,047; EPC 567 514 and 08/434,889).

Apart from the prolonged circulation time leading to undesired exposure of toxic immunoconjugate to healthy tissue, inadequate tumor tissue penetration and non-specific organ retention and metabolism contribute to a low therapeutic index ratio. Due to these problems, multi-step antibody-based radionuclide delivery approaches have been extensively investigated. The basic concept involves first the injection of a lesion-specific targeting moiety which apart from binding specifically to the lesion also has the feature of binding to a subsequently injected radioactive diagnostic agent or a therapeutic agent. By separating these two events one can allow the slow tissue penetrating non-radioactive/non-cytotoxic antibody sufficient time to accumulate in the tumor mass, while the agent carrying the radionuclide/- cytotoxin could be selected for more rapid tissue penetration. However, a prerequisite is that the former (and preferably also the later) can be cleared rapidly from the blood circulation.

Most of these multi-step approaches utilize binding pairs of avidin/streptavidin and biotin. Avidin is a 67 kDa glycoprotein found in egg whites and tissue of birds and amphibia. It consists of 4 non-covalently bound subunits. Each subunit is capable of binding one biotin molecule. Avidin has a high isoelectric point (pI>10), due to its 36 lysine amino acid residues, which results in non-specific binding to cellular membranes. Streptavidin (SAv), produced in Streptomyces avidinii, is a close relative of avidin. It shares high affinity to biotin, but differs in amino acid content as well as net charge (pI 6.5) and is not glycosylated. Due to lack of sugar groups, SAv has a slightly lower molecular weight of 60 kDa and the in vivo pharmacokinetics and biodistribution differs markedly from avidin. Whereas intravenous injection of radiolabelled avidin clears rapidly from the blood and accumulates extensively in the liver, radiolabeled SAv exhibits a much longer circulation time, and has lower organ accumulation (Pimm MV et al. Nucl. Med. Comm.1988 Vol. 9, 931-941; Schechter B et al., Eur. J. Biochem. 1990, Vol. 189, 327-331; Rosebrough SF, Nucl. Med. Biol. 1993, Vol.20, 663-668).

The other part of the binding pair, biotin, is a vitamin and a member of the B-complex, which is essential for amino acid and odd-chain fatty acid synthesis. Biotin in found preferentially intracellular, usually bound to an enzyme and acts as a co-factor during carboxylation reactions. Biotin is often present as a lysine-biotin adduct (biocytin), in food and during metabolic protein turnover. The linkage between lysine and biotin is cleaved by a plasma enzyme, biotinidase.

TENNVALL, Jan et al. (Improving Tumor-to-Normal-Tissue Ratios of Antibodies by Extracorporeal Immunoadsorption Based on the Aviden-Biotin Concept, Cancer Vol. 80, no. 12, Suppl. 15, 15 december 1997, pages 2411 - 2418) discloses a method for extraction of biotinylated radiolabeled tumor-specific antibodies for improving radioimmunotherapy.

To improve the imaging in patients with carcinoma of the lung, Kalofonos et. al. used a two-step SAv-MAb / 111In DTPA-biotin approach (Kalofonos HP et al., J. Nucl. Med. 1990, Vol. 31, 1791-1796). Van Osdol et. Al. And Sung et. al. have developed a mathematical model of two-step imaging, and treatment protocols using SAv-MAb and radiolabelled biotin chelates. Taken into account the in vivo parameters of both the targeting SAv-MAb moiety and the radiolabelled biotin imaging agent, they predicted the following:
1) The large molecular weight of SAv-MAb will reduce the amount of MAb that will localize in the tumor and the binding homogeneity in the tumor.
2) Radiolabelled biotin will diffuse rapidly into the tumor, but due to the high affinity to peripheral tumor-bound SAv-Mab, will not penetrate deeply into the nodule if too low dose is given.
3) Compared to directly labeled MAbs, the two-step SAv-MAb/ radiolabelled biotin protocol permits imaging sooner after radioactive injection and produced higher tumor/blood ratios.
4) That tumor/blood ratios at 24 hrs are > 2 times higher that with the use of directly labeled MAbs.

In their simulation, a high percentage of the radioactivity is bound to circulating SAv-MAb and that the addition of clearing agent before radiolabelled biotin was injected would enhance the tumor blood ratio.

A two-step approach using biotinylated MAbs and radiolabelled SAv has also been utilized in animal models as well as in patients (Paganelli G. et. al. Eur. J. Nucl. Med. 1992, Vol. 19, 322-329; Khawli LA et al. Abs. Immunoconj. Radiopharm. 1993 Vol. 6, 13-27; Kassis AI. et. al. J. Nucl. Med. 1996 Vol. 35, 1358-1365). In this method, both the targeting and the imaging agents are of large molecular weight and clear slowly from the blood. The whole procedure takes many days to complete and with metabolism, radioactivity accumulates in organs and is slowly eliminated from the body. Nevertheless, these studies showed that biotin/SAv binding was accomplished in vivo and yielded positive images and enhanced tumor activity compared to directly labeled MAbs.

A three-step procedure consisting of biotinylated MAb, avidin and then followed by 111In-DTPA-biotin has also been tried (Paganelli G et al. Canc. Res. 1991 Vol. 51, 5960-5966; Dosio F. et. al. J. Nucl. Biol. Med. 1993 Vol.37, 228-232). This procedure required 1-3 days between injections to allow for tumor accumulation and blood clearance. As a whole, all these studies have shown the feasibility of immunological approaches utilizing the SAv / biotin system in vivo. However, circulating levels of the high molecular weight targeting agents were problematic due to their prolonged circulation and non-specific organ accumulation.

An alternative pretargeting approach uses three separate injections of three components: [1] SAv-Mab, [2] a clearing agent, and [3] a radiolabelled biotin derivative containing the radiometal chelation moiety DOTA has been thoroughly investigated (Axworthy DB et al. J. Immunother. 1994, Vol. 16, 158). A covalent conjugate of tumor-specific MAb and SAv is injected and is allowed to accumulate at tumor sites. After sufficient tumor uptake (24-48 hrs) a biotin clearing agent is administered in order to clear the blood from the conjugate through the liver. Finally, the radiolabelled biotin-DOTA derivative is injected. The clearing agent used in this context is typically a biotinylated protein to which galactose residues have been conjugated. The galactose receptors resides on hepatocytes and exhibit a high affinity and specificity for macromolecules with exposed terminal galactose residues. The hepatic uptake correlate with the amount of galactose residues bound to SAv (Rosebrough SF, J. Nucl. Med. 1996, Vol.37, 344-350).

In all these concepts there is bound to be a conflict between initial concentration of the targeting molecule and its ability to penetrate deep into the tumor on one hand, and a rapid and complete clearance from the blood prior to administration of the radioactive/cytotoxic agent, on the other. In principle, the same condition applies for the radioactive/cytotoxic agent. A sufficiently high initial blood concentration is essential to reach and saturate the targeting molecule. At the same time this toxic agent must not reside in the blood circulation and exposing sensitive tissues like the bone marrow. Even if the toxic agent is cleared fairly rapidly through the body, organs like the kidney and the urinary track will normally receive an accumulated toxic dose equally or higher to that received by the tumor tissue.

There is clearly a need for optimizing these and other therapy protocol conditions, particularly if the approaches are going to be adequate for the treatment of solid tumors. It is vital that such concepts are to a large extent generic, in so far that as many as possible of the parameters are independent on the type and localization of the disease and as much as possible independent on the pharmacokinetic parameters and rate of metabolisms of the individual patient.

Bioconjugate Chem. Volume 8, 1997, D. Scott Wilbur et al, "Biotin Reagents from Antibody Pretargeting. 2. Synthesis and in Vitro Evaluation of Biotin Dimers and Trimers for Cross-Linking of Streptavidin", page 819-page 832, and WO 97729114 A1 (BOARD OF REAGENTS OF THE UNIVERSITY OF WASHINGTON), 14 August, 1997, both disclose polymerization and/or cross-linking recombinant streptavidin with biotin derivatives containing biotin dimers and trimers as an in vivo method for increasing the amount of radioactivity on cancer cells in tumour pretargeting protocols.

### Summary of the Invention

The object of the present invention is to eliminate the above-mentioined problems with toxic or undesired compounds in blood. This object is achieved with a method according to present claim 1 for the conditioning of an extracorporeal device for the extracorporeal extraction of toxic material from mammalian blood in connection with diagnosis or treatment of a mammalian condition or disease, in which methods a reagent is used having the ability to extract toxic material from blood and comprising the general formula: 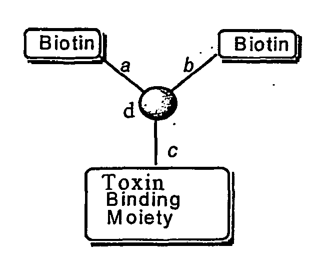 wherein the biotin moieties are natural biotin or derivatives thereof as defined in claim 1,
wherein a, b, and c are linkers as defined in claim 1, which are same or different, and wherein d is a trifunctional crosslinking moiety as defined in claim 1, said reagent is alternately called conditioning reagent in the description, or with reference embodiments of said methods, in which the toxin binding moiety of the reagent is biotin or a derivative thereof for the extracorporeal extraction of toxic material from mammalian blood in connection with diagnosis or treatment of a mammalian condition or disease. Other objects and advantages will become apparent from the detailed description of the invention.

In one aspect of the present invention, reactive dibiotin compounds are coupled with ligands that selectively bind with components naturally found in, or artificially introduced into, blood, and the resulting conjugates are used to condition avidin or streptavidin containing column matrixes for medical applications. In another aspect of the present invention, an extracorporeal device containing a column that has been conditioned with the dibiotin conjugate is connected to an apparatus that pumps whole blood from patients through the column and back into the patient to cleanse the patients blood of materials that bind with the dibiotin conjugate. Thus, the objective of the present invention is also to facilitate the use of extracorporeal clearance of toxic agents by providing means of a one step conversion of a biotin-binding device to toxic substance binding device by the use of water soluble molecule that contains two biotin moieties.

Other aspects, wherein the reagent is tribiotinylated, are described in the following examples.

### Short description of the Drawings

- Fig. 1: illustrates the conditioning of a (strept)avidin matrix with derivatized dibiotin compounds.
- Fig. 2: illustrates the binding of toxic material with a conditioned column.
- Fig. 3: illustrates the generic structure of the column conditioning reagent.
- Ref. Fig. 4: shows a standard curve for biotin-trimer ELISA.
- Ref. Fig. 5: shows a typical depletion curve of avidin by an biotin-trimer/avidin column.

### Disclosure of Preferred Embodiments

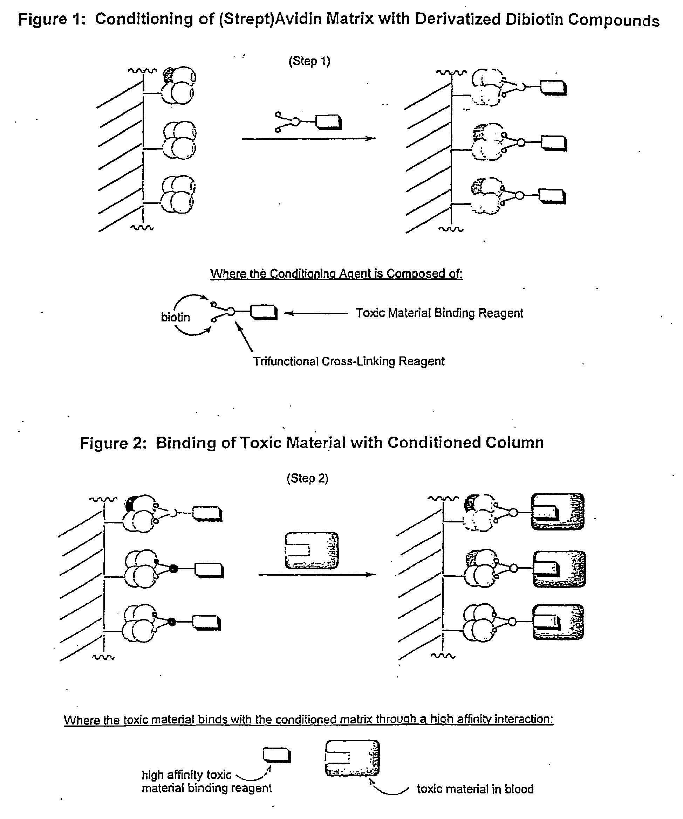

The present invention also involves a conditioning method for converting a biotin-binding matrix to a matrix that can bind a variety of substances toxic to the body. Specialized avidin or SAv coated columns are used in the invention as these provide a binding surface for toxic compounds (e.g. radiolabeled antibodies) which have biotin attached (Nilsson. R. et.al. ,EPC 567 514). These columns have the proper characteristics for passing whole blood over them and obtaining good clearance in a reasonable time period. The present invention greatly expands the use of the avidin/SAv columns by their conversion to bind other types of molecules in a two step process. In the first step, column conversion from the biotin-binding (strept)avidin coated column to a column that binds a toxic material can be accomplished by conditioning it with an excess of a dibiotin derivative as shown in Figure 1. In a second step, the conditioned column can be used in an extracorporeal device to rid the blood of the toxic substance. Binding of the toxic substance with the conditioned column is depicted in Figure 2. The two steps can be separated by time with storage of the conditioned column.

In a preferred embodiment of the invention, a toxic medical agent used for therapy of human disease is removed from the blood to improve its ratio of target-to-non-target concentration. An improved target-to-non-target ratio provides a better therapeutic index. Specific tissue or organ localization of a medical agent is a very important factor in its effective application. Lack of specific tissue localization is of particular importance in the treatment with medical agents, where the desired effect is to kill certain types of cells such as in the treatment of cancer. In order to enhance the specificity, tumor specific monoclonal antibodies are used as a carrier (immunoconjugates) of various cytotoxic agents, such as radionuclides, cytotoxins, and enzymes used in pro-drug protocols (Meyer et al., Bioconjugate Chem. 6, 440-446; 1995; Houba et al., Bioconjugate Chem. 7, 606-611, 1996; Blakey et al., Cancer Res. 56, 3287 -3292, 1996).

The term "reagent" (also "conditioning reagent") used herein means a compound containing two functions for specific interaction with a single biotin binding molecule and a separate function for the binding of toxic material. It can be used to convert a biotin binding matrix to a matrix that can be used to extract specific toxic material from blood or be used to convert a biotin binding matrix to a matrix which binds biotin binding molecules.

The term "effector molecule" used herein means any moiety which can be linked to a targeting molecule or to a molecule interacting with a targeting molecule (targeting molecule complex) and which either enhances the effect of the targeting molecule/ targeting molecule complex or which alone contribute to a desirable pharmacological or diagnostic effect.

The term "toxic material" used herein means any compound, optionally in a conjugate with an effector molecule, cluster of compounds, cells etc. which can be extracted from mammalian blood by the use of the reagent.

The term "toxic binding moiety" used herein means any moiety capable of extracting toxic material from mammalian blood by specifically interacting with the toxic material. In some reference embodiments, the toxic binding moiety is biotin or a derivative thereof.

The term "biotinylated molecules" used herein means molecules that penetrates mammalian tissue more readily than immunoglobulines, e.g. a radiolabelled biotin derivative containing a radiometal chelation moiety.

The term "targeting biomolecule" used herein means biomolecules which selectively bind to certain structures on mammalian cells.

For affinity adsorbents the matrix (M) may be of various shape and chemical composition. It may for example constitute a column house filled with particulate polymers, the latter of natural origin or artificially made. The particles may be macroporous or their surface may be grafted, the latter in order to enlarge the surface area. The particles may be spherical or granulated and be based on polysaccharides, ceramic material, glass, silica, plastic, or any combination of these or alike material. A combination of these could for example be solid particles coated with a suitable polymer of natural origin or artificially made. Artificial membranes may also be used. These may be flat sheet membranes made of cellulose, polyamide, polysulfone, polypropylene or other types of material which are sufficiently inert, biocompatible, non-toxic and to which the receptor could be immobilized either directly or after chemical modification of the membrane surface. Capillary membranes like the hollow fibers made from cellulose, polypropylene or other materials suitable for this type of membranes may also be used. A preferred embodiment is a particulate material based on agarose and suitable for extracorporeal applications.

The biotin-binding molecule may be immobilized to matrix by various methods. The coupling method of choice will depend on the nature of the biotin-binding molecule as well as the nature of the support matrix. For proteins, functional groups such as hydroxyl-, amino-, carboxyl- or thiolgroups may be utilized. Glycoproteins like avidin may be coupled to the matrix via their glycosyl residues. The solid support may also be activated to enable binding of proteins by forming linkages with the solid support through specific or non-specific reaction with the side-chains or the backbone structure of the protein. The linkage between the solid support and the biotin-binding molecule may also be of non-covalent nature, where electrostatic, hydrogen bonding or hydrophobic forces are utilized. For applications in immunoassays a non-covalent attachment would be most appropriate. A spacer between the matrix and the biotin-binding molecule may also be used.

The conditioning reagent is composed of a molecule that has two biotin moieties as well as a toxic material binding moiety. Two biotin moieties are important in the invention as this arrangement allows both biotin moieties to bind with the same (strept)avidin molecule on the column, which cross-links the subunits and helps to stabilize the column to the conditions of blood movement through it. Cross-linking of biotin moieties with adjacent (strept)avidin moieties does not occur as the biotin dimers bind much more rapidly with the adjacent biotin binding pocket (intramolecular binding) rather than with a biotin binding pocket on an adjacent molecule (intermolecular binding) [Wilbur et al. Bioconjugate Chem. 8, 819-832, 1997). Avidin and streptavidin are more stable when biotin is bound, and cross-linking the subunits provides additional stability (Biomolecular Engineering 16, 67-72, 1999).

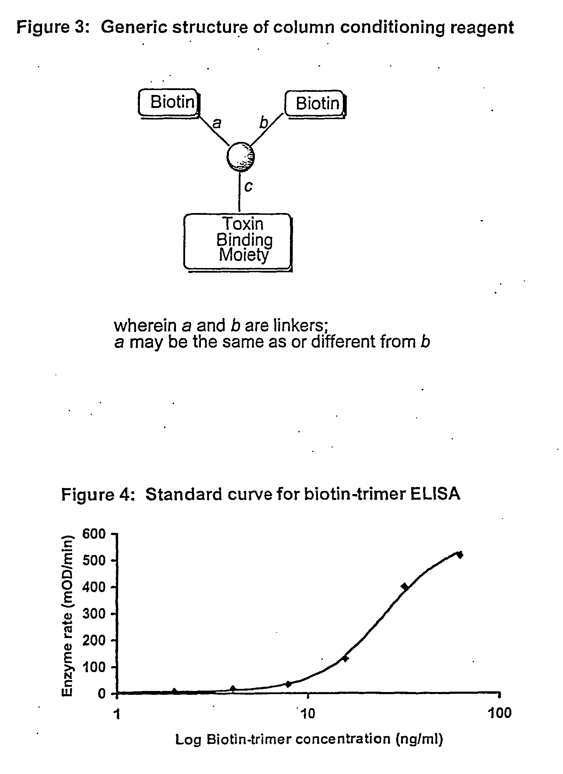

The conditioning reagent is comprised of two biotin moieties, a toxin binding moiety, a trifunctional cross-linking moiety, and three linker molecules (a-c) as depicted in Figure 3. The two biotin moieties are comprised of natural biotin or biotin derivatives cited in claim 1 coupled to the linker molecule(s) (a,b) through the biotin carboxylate via an amide bond. The biotin moieties are coupled to the trifunctional cross-linking reagent through linker molecules that provide a minimum of 20 Å and a maximum of 60 Å between the biotin carboxylate carbon atoms when measured in a fully linearized form. Linker molecules a, b and c, also called linkers for short, may be the same or each linker may be of a different nature. The linker molecules are linear or branched chained and contain water solubilizing functionalities such as ether/- thioether bonds, amines, in the chain, or appendages to the chain which contain amines, carboxylates or hydroxyl functionalities. The atom on the linker alpha to the biotinamide bond may be unsubstituted (e.g. CH₂) or may contain a methyl, hydroxymethylene, or carboxylate functionality. Larger functionalities diminish the binding with (strept)avidin columns. The later functionalities provide stability from biotinidase, but this stability is not required for the two biotin moieties binding with (strept)avidin on the columns as they are not available for cleavage by biotinidase. The trifunctional cross-linking reagent is an aromatic compound that contains three functional groups that are nucleophiles, or are reactive with nucleophiles, for conjugation with the linker molecules. The trifunctional cross-linking reagent is an aromatic ring with 1,3,5-substitutions. Most preferred are derivatives of 1,3,5-benzene tricarboxylic acid, 3,5-diaminobenzoic acid, 5-amino-1,3-dicarboxybenzene (aminoisophthalic acid). The toxin binding moiety is chosen from monoclonal antibodies (or fragments or genetically engineered counterparts), aptamers, peptides, oligodeoxynucleotides (or binding fragments), intercalation reagents (e.g. dyes, chemotherapy agents, natural substances), and metal chelates that specifically bind with the toxin or an :effector molecule attached to the toxic material. Examples of toxic materials include: metal ions, chemotherapy agents, free radionuclides, radionuclides bound to other compounds, ingested toxins, toxins produced by bacteria, toxins produced by viral infections,-toxins-produced by disease states, diseased cells, cells involved in the immune response, blood group or HLA incompatibility as well as incompatibility with xenoantibodies.etc.

The biotin residue is biotin or a derivative thereof. In most examples the biotin moiety will be natural biotin , which is coupled to a linker through an amide bond. In some examples it may be advantageous to have a biotin derivative that does not bind as tightly as natural biotin, or a biotin derivative that binds to chemically modified, or genetically mutated, avidin or streptavidin in preference to natural biotin. The biotin derivates of the invention are norbiotin, homobiotin, oxybiotin, iminobiotin, desthiobiotin, diaminobiotin, biotin sulfoxide, and biotin sulfone. The two biotin moieties in the reagent according to the present invention may alternatively be comprised of any of the biotin derivatives listed above.

In a reference embodiment, the toxin binding moiety is biotin or a biotin derivative. Conditioning of the avidin or streptavidin column with this reagent (reference tribiotin reagent) permits removal of toxic materials that are combined with avidin or streptavidin (or these reagents which are chemically modified, truncated by enzymatic digestion, or altered through genetic mutation methods). Reference Examples of a conditioning reagent that contains 3 biotins is shown in Scheme 1. A medical application for this Reference conditioning reagent is to remove from a patient's blood, avidin or streptavidin that has a therapeutic radionuclide bound to it. In the Reference examples shown (compounds 1-3) the conditioning are the same except for the nature and length of the linker group. The cross-linking reagent employed is 1,3,5-benzene tricarboxylic acid, and the linkers used contain ether functionalities for water solubilization. In Reference compound 3, the linker also contains aspartic acid which provides a free carboxylate to aid in water solubilization and to block the action of biotinidase.

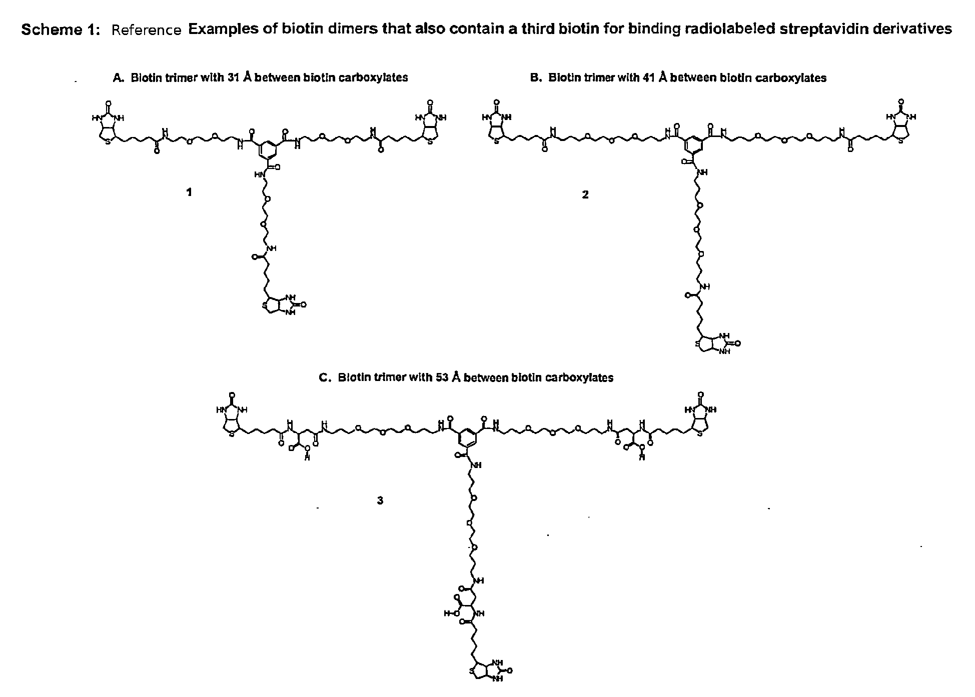

Other toxic material binding dibiotin conditioning reagents involved in the methods according to the present invention can be readily prepared by conjugating a nucleophile containing, or nucleophile reactive, dibiotin compound with the toxic material binding moiety. Examples showing the synthesis of reactive dibiotin compounds are provided in Schemes 2 and 3. The tetrafluorophenyl ester activated and N-tBoc protected aminoisophthalate, 4, is used as the trifunctional cross-linking reagent in these examples. Reaction of 4 with biotin-conjugated to the linker, 4,7,10-trioxatridecanediamine provides dibiotin compound 5. The N-tBoc protection group in 5 is readily converted to the free amine, 6, with neat trifluoroacetic acid. Anilino compound 6 is reactive with toxic material binding compounds that contain activated carboxylate esters or that will undergo other nucleophilic displacement reactions. The free amine of 6 is also readily converted to functional groups that are reactive with nucleophiles (e.g. isothiocyanate, 7; maleimide, 8, or other reagents such as alpha-halo acetamides). The isothiocyanato-dibiotin compound 7 is reactive with toxic material binding molecules that contain amines, and the maleimido-dibiotin 8 is reactive with toxic material binding molecules that contain sulfhydryls (also amines). Additional reactive reagents can be readily prepared in the same manner. A reagent that is reactive with oxidized sugars and alcohols is the hydroxylamine derivative 10. In the examples in Scheme 2, the linker c is either not present or is first attached to the toxic material binding molecule. In many examples, a linking molecule will be desired to make the toxic material binding moiety more available for interaction with the toxic material in blood. Therefore, a linker may be built into the molecule prior to reaction with the toxic material binding molecule. Examples where a linker molecule has been incorporated are shown in Scheme 3 (compounds 11-14)

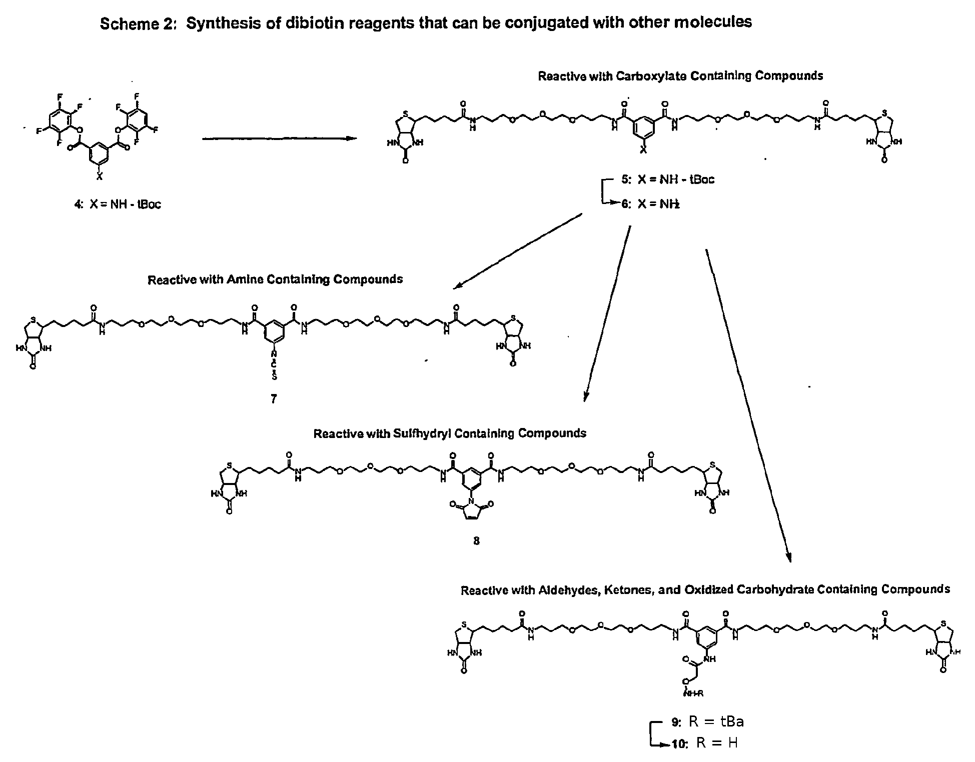

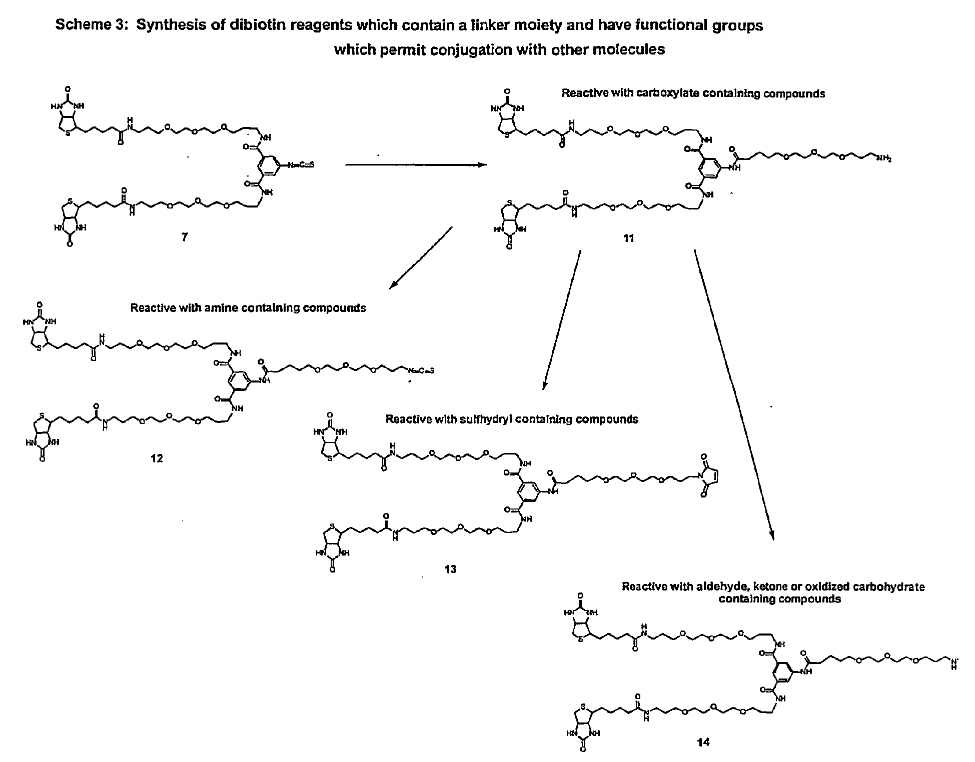

### Examples

The following examples are provided to show methods for obtaining various types of compounds disclosed in this patent and their use as a reagent in conditioning the column for toxin removal from whole blood.

### Example 1

Preparation of a dibiotin compound that can be conjugated with toxin binding molecules

### Step 1: Preparation of N-tert-Boc-5-aminoisophthalic acid

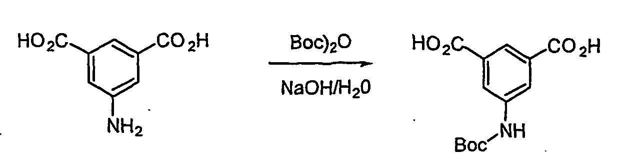

Di-tert-butyl dicarbonate (1.27 g, 5.80 mmol) was added to a solution of 5-aminoisophthalic acid (1.0 g, 5.52 mmol), sodium hydroxide (0.49 g, 12.14 mmol), DMF (10 mL) and water (10 mL) at ice/water bath temperature. The reaction mixture was stirred at ambient temperature for 16 h. The solution was neutralized with 53.0 mL of 0.5 N HCl at ice/water bath temperature, then the white precipitate was filtered, washed with water, and dried under vacuum. The residue was crystallized from MeOH/H₂O to give the pure compound as a white solid. Yield 0.94 g (61%). mp >300°C. 1H NMR (DMSO-d6) : δ 1.50 (s, 9H), 8.08 (t, J = 1.5 Hz, 1H), 8.31 (d, J = 1.5 Hz, 2H), 9.80 (s, 1H). HRMS calcd.
lcd for C₁₃H₁₆NO₆ (M + H)+: 282.0977. Found: 282.0981. HPLC: tR =11.3 min.

### Step 2: Preparation of N-tert-Boc-5-aminoisophthalate di-tetrafluorophenyl esther.

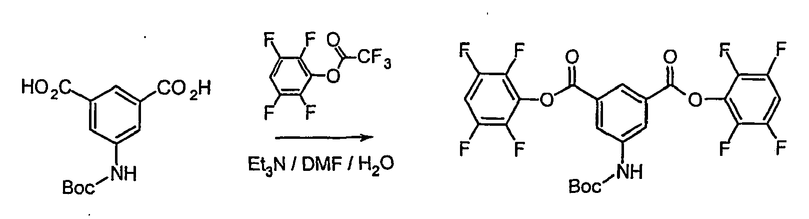

2,3,5,6-Tetrafluorophenyl trifluoroacetate (0.47 mL, 2.71 mmol) was added dropwise to a solution of tert-Boc-5-aminoisophthalic acid (0.35 g, 1.23 mmol), NEt₃ (0.52 mL, 3.70 mmol), DMF (4.0 mL) and water (10 mL) at room temperature. A 60 mL quantity of water was added after the reaction mixture was stirred at room temperature for 30 min, the white precipitate was filtered, washed with water, dried in vacuo to give the crude product. The crude product was purified by silica gel column chromatography (40 g) eluting with 10% EtOAc/- hexane to give a colorless solid. Yield 0.213 g (30%). mp 159.7-161.8°C dec. 1H NMR (CDC13):
1.55 (s, 9H), 6.83 (s, 1H), 7.08 (m, 1H), 8.54 (d, J = 1.5 Hz, 2H), 8.67 (t, J = 1.5 Hz, 1H). HRMS calcd for C₂₅H₁₅F₈NNaO₆ (M + Na)+: 600.0669. Found: 600.0674. HPLC: tR =
16.1 min.

### Step 3: Preparation of N-(13-amino-4,7,10-trioxatridecanyl)biotinamide.

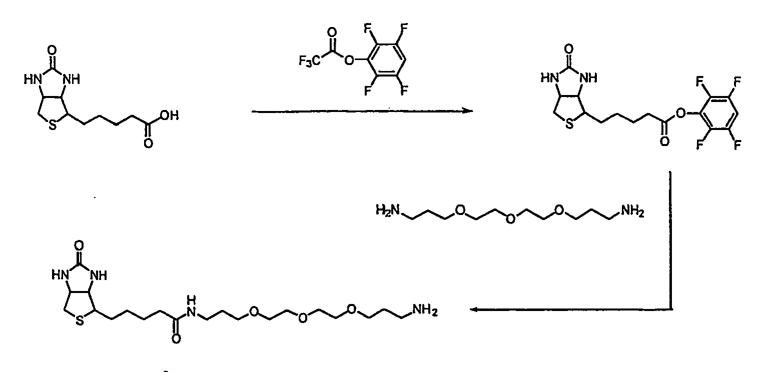

Biotin (10 g, 40.9 mmol) was dissolved in 200 mL warm (70°C) DMF under argon atmosphere. The solution was allowed to cool to ambient temperature, 10 mL (82 mmol) triethylamine was added, followed by the addition of 16 g (61 mmol) 2,3,5,6-tetrafluorophenyl trifluoroacetate. The reaction was stirred at room temperature for 30 min and solvent was removed under vacuum. The product was triturated in 100 mL ether and was filtered. The isolated product was dried under vacuum to yield 14 g (83%) of biotin TFP ester as a colorless solid, mp 185-187°C. 1H NMR (DMSO-d6, () : 1.4-1.8 (m, 6H), 2.5 (m, 1H), 2.6-2.9 (m, 3H), 3.1 (m, 1H), 4.2 (m, 1H), 6.4 (d, 2H), 7.9 (m, 1 H); IR (KBr, cm-1) 3250, 2915, 1790, 1710, 1520, 1480, 1090. Analysis calc. for C₁₆H₆F₄N₂O₃S: C, 48.98; H, 4.11; N, 7.14. Found: C, 48.90; H, 4.14; N, 6.86.

Biotin TFP ester (5 g, 12.8 mmol) was added to a dry flask containing 200 mL anhydrous DMF. In another dry flask containing 28 g (128 mmol) 4,7,10-trioxa-1,13-tridecanediamine, 8, was added 4 mL of triethylamine. Both flasks were cooled to 0-5°C with ice-water baths. The TFP ester of biotin was added dropwise to the trioxatridecanediamine solution over the period of 1 h. The reaction was stirred at room temperature for 30 min and the solvent was removed under vacuum. The resulting oil was triturated in 500 mL ether and was stirred for 30 min. The solid was filtered, then dissolved in methanol: ethyl acetate (4:1), and loaded onto a silica column (2.5 cm x 35 cm). The column was eluted with the same solvent mixture. Fractions containing product were collected, and solvent was removed under vacuum. The isolated product was dried under vacuum to yield 4.5 g (79%) of, 9, as a colorless solid, mp 104-106°C. 1H NMR (MeOH, (): 1.46 (m, 2H), 1.6-1.8 (m, 9H), 2.2 (t, 2H), 2.7 (d, 1H), 2.75 - 2.9 (m, 3H), 3.2-3.3 (m, 5H), 3.5-3.6 (m, 14H), 4.3 (m, 1H), 4.5 (m, 1H); IR (KBr, cm-1): 3280, 2910, 2850, 1690, 1640, 1110, 940. Analysis calc. for C₂₀H₃₈N₄O₅S·H₂O: C, 51.70; H, 8.68; N, 12.06. Found: C, 51.95; H, 7.98; N, 11.65.

### Step 4: 1-N-tert-Boc-3,5-Bis(13'-(biotinamidyl)-4',7',10'-trioxatridecanamidyl)-aminoisophthalate.

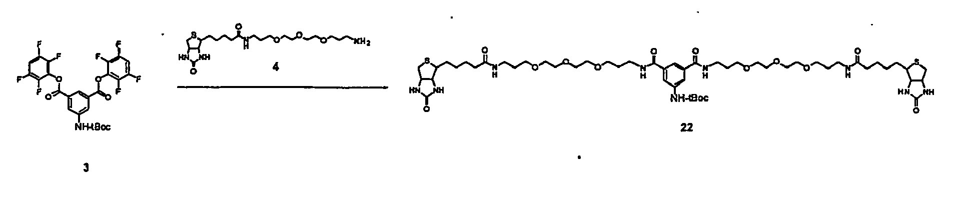

Biotin-trioxadiamine, 4 (100 mg, 0.22 mmol) in anhydrous DMF was added dropwise to a solution of 3 (65 mg, 0.11 mmol) and triethylamine (47 µL, 0.33 mmol) in anhydrous DMF at rt (room temperature). The reaction mixture was stirred at rt for 2 h, and then the solution was evaporated to dryness under vacuum. The residue was purified by silica gel column (40 g) eluting with 20% MeOH/EtOAc to yield 73 mg (58%) of a colorless solid, mp 209-211°C dec. 1H NMR (CD₃OD 200 MHz): δ1.43 (t, 3H), 1.54 (s, 9 H), 1.69 (m, 6H), 1.88 (m, 3H), 2.19 (m, 4H), 2.69 (d, 4H), 2.92 (m, 2H), 4.30 (m, 2H), 4.48 (m, 2H), 7.83 (m, 1H), 8.00 (m, 2H); mass calcd for C₅₃H₈₈N₉O₁₄S₂ (M + H))+: 1139. Found: 1139. mass calcd for C₅₃H₈₇N₉O₁₄S₂Na (M + Na)+: 1161. Found: 1161. HPLC 11.8 min.

### Step 5: 1-Isothiocyanato-3,5-Bis(13'-(biotinamidyl)-4',7',10'-trioxatridecandyl)-aminoiso-phthalate

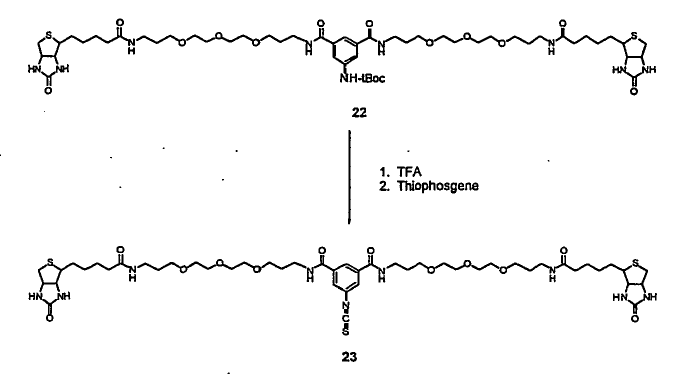

A 120 mg quantity of 22 (0.11 mmol) was dissolved in neat TFA (1 mL) and stirred at rt for 10 min. Following this, excess TFA was removed under vacuum. The residue was dissolved in 2 mL of methanol and treated with 0.2 mL of triethylamine. The volatile materials were removed under vacuum, then water (3 mL), chloroform (3 mL) and thiophosgene (42 µL, 0.55 mmol) were added respectively. The mixture was stirred at rt for 1 h. Following this, excess thiophosgene and chloroform were evaporated in fume hood under a stream of argon. The remaining aqueous phase was evaporated to dryness under vacuum to afford 77 mg (68%) of 23 as a light yellow tacky solid. 1H NMR (DMSO-d6, 200 MHz): δ 1.24-1.35 (m, 6H), 1.43-1.67 (m, 14H), 1.77 (t, J = 6.6 Hz, 6H), 2.05 (t, J = 7.1 Hz, 6H), 2.58 (d, J = 12.5 Hz, 2H), 2.82 (dd, J = 4.8, 12.5 Hz, 2H), 3.07 (m, 8H), 3.28-3.57 (m, 18H), 4.13 (dd, J = 4.6, 7.7 Hz, 2H), 4.31 (dd, J = 4.6, 7.7 Hz, 2H), 7.80 (t, J = 5.0 Hz, 2H), 7.98 (s, 2H), 8.34 (s, 1H), 8.77 (t, J = 5.1 Hz, 2H) mass calcd for C₄₉H₇₈N₉O₁₂S₃Na (M + Na)+: 1103.
Found: 1103. HPLC 11.8 min.

### Example 2

### Conjugation of a dibiotin compound with a toxin binding molecule

A 108 mg (15 equiv.) quantity of the dibiotin isothiocyanate compound, 23, in 4 µL DMSO was added to 150 µL of a 6.7 mg/mL solution of the monoclonal antibody 53-6A2 (1 mg). The mixture was lightly vortexed, then allowed to react at room temperature overnight. The dibiotin conjugated antibody was purified from excess dibiotin reagent by ultracentrifugation filtration at 6000 rpm in a Centricon 30, followed by 4 x 1 mL washings with 0.9% saline.

### Reference Example 3

### Conditioning of an avidin column with a dibiotin -toxin binding conjugate

This example provided is that of a dibiotin compound that also contains another biotin moiety. Two of the biotin moieties will bind with avidin or streptavidin leaving the third biotin moiety available for binding with toxic compounds that are also conjugated with, or are fusion proteins containing, avidin or streptavidin. Thus, in this example the dibiotin compound is a biotin trimer, but the same methods may be used to condition a column with dibiotin compounds that contain other high affinity binding ligands.

Conditioning of a biotin binding column to convert it to an avidin-binding column:

Two mL of Mitra Avidin-Agarose was packed into a column housing and was washed with >10 mL of PBS at a flow rate of 1 mL/min (1.6 cm/min). Five mL of a 1 mg/mL solution of biotin-trimer in PBS was recirculated through the avidin-column at 1 mL / min for 20 minutes. At end of the recirculation, a sample (0.5 mL) was drawn from the recirculated solution and analysed by an ELISA technique developed by Mitra Medical Technology AB. The biotin-avidin-agarose-column was washed with phosphate buffer at 1 mL / min for 20 minutes. By determining the concentration of biotin-trimer in the recirculated fluid, the amount of adsorbed biotin-trimer was estimated to about 1.9 mg i.e. 0.95,mg/mL of gel at the end of recirculation. The standard curve for determining the concentration of biotin-trimer is shown in Fig.4.

Biotin-trimer was adsorbed to 2 mL of Mitra Avidin-Agarose. The batch of avidin-agarose utilized had a static binding capacity of biotin of about 74 g/mL. If one biotin-trimer is bound per available binding site this would correspond to 514 g biotin-trimer/mL. As about 0.95 mg biotin-trimer was bound per mL avidin-agarose it can be assumed that the adsorbent was saturated with biotin-trimer.

Assessment of avidin adsorption on a conditioned column:

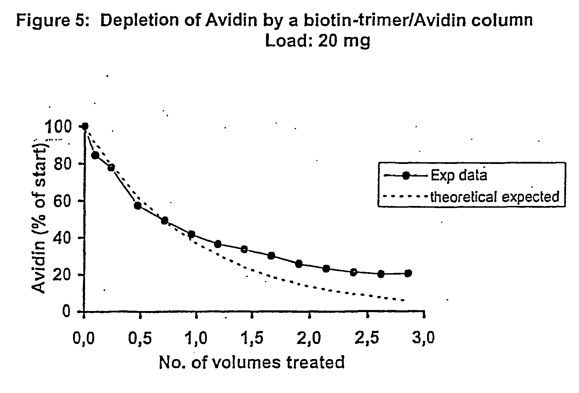

An avidin-agarose column that was conditioned with a biotin trimer (i.e. Figure 4, compound #2) was primed with phosphate buffer. Following this, 20 mL avidin-solution with 1 mg avidin / mL in PBS was recirculated through a biotin-avidin-agarose-column at 1.0 mL / min (1.6 cm/min). Three volumes of the avidin solution (3 x 20 mL) were processed and aliquots were drawn from the reservoir before start of the recirculation, then after 2 min and in 5 min intervals. The aliquots were analyzed for the quantity of avidin in them using an ELISA technique developed by Mitra Medical Technology AB. The concentration of avidin in the recirculation reservoir is shown in **Fig. 5**. The dotted line represented the theoretically expected if no saturation effect has occurred. The column is saturated after about 40 min (2 vol.) when about 16 mg (80%) of avidin has been bound. Signs of saturation was seen after about 20 min (1.0 vol.) when the experimental curve begin to deviate from the theoretical curve which occurred when about 10 mg of Avidin had been bound to the column.

After a 40 min recirculation, about 16 mg of avidin was bound, i.e. 8 mg/mL biotin-avidin-agarose. This corresponds to a 1:1 molar ration between the avidin coupled to agarose and the avidin adsorbed to the biotin-trimer. Initial saturation effects were seen after about one recirculated volume. After 2 volumes processed no further avidin was bound.

The experiments showed that the Avidin-Agarose can be saturated with a biotin-trimer, binding to all sites available for monomeric biotin and that recirculated free avidin efficiently binds to a column packed with the biotin-avidin-agarose. About 8 mg avidin was bound per mL of adsorbent, corresponding to a 1:1 molar ratio between bound avidin and avidin immobilized to the agarose particles.

### Example 4

### Use of a conditioned column to remove toxins from blood

To facilitate the removal of specific toxins from the blood circulation by passing the blood through an avidin/streptavidin coated device which has prior to the use been converted to a specific device by passing a solution containing a column conditioning reagent carrying a specific toxin binding moiety. This would allow the avidin/streptavidin coated device to be used as a technology platform for the removal of various toxins. In specific cases it could be desirable to remove more than one toxin in the same treatment procedure which could easily be achieved by passing a mixture of column conditioning reagents carrying different specific toxin binding moiety. A suitable application for such a multifunctional device could be in the blood clearance of anti-HLA antibodies, anti-blood group antibodies or anti-xenoantibodies prior to organ or cell transplantation. By using a suitable mixture of column conditioning reagents carrying different specific toxin binding moiety directed towards specific sub-types of e.g. anti-HLA antibodies, the toxin removal device can be tailor-made for the patients need prior to treatment.

The conditioning can occur in a the hospital by connecting infusion bags containing the appropriate conditioning reagents carrying different specific toxin binding moieties directed towards specific sub-types to the monitoring unit (reprogrammed dialysis machine) used in the extracorporeal treatment, and the conditioning of the avidin/streptavidin device could be achieved manually or automatically by the monitoring unit. The flow rate of the column conditioning reagent solutions entering the device will in such case determine the proportion of the different specific toxin binding moieties in the final conditioned device.

Alternatively, infusion bags containing mixtures of column conditioning reagents carrying different specific toxin binding moieties or the final devices could be premanufactured with certain mixture of specific toxin binding moieties.

### Example 5

### Application of a conditioned column to improve immunotargeting in a two step procedure

To improve immunotargeting in a two-step procedure by in the first step providing means of efficiently clearing the blood circulation from biotinylated targeting molecules by passing the blood through biotin-binding device and in a second step clearing the blood from subsequently administered toxic derivative of avidin/streptavidin by passing the blood through an avidin/streptavidin binding device which has been produced by passing a solution containing the reagent according to the present invention, biotin dimers or reference trimers, through the biotin-binding device.

Alternatively, the order of this process can be reversed as follows.

To improve immunotargeting in a two-step procedure by in the first step providing means of efficiently clearing the blood circulation from SA/avidin conjugated targeting molecules by passing blood through an avidin/- streptavidin binding device which has been produced by passing a solution containing biotin dimers or reference trimers through the biotin-binding device, and in a second step clearing the blood from molecules containing the reagent involved in the methods according to the present invention, e.g. biotin and a radionuclide/ cytotoxic moiety by passing the blood through a biotin binding device.

Yet another alternative is to improve immunotargeting in a two-step procedure by in the first step provide means of monitoring the tumor up-take of a biotinylated targeting molecule labeled with an agent which can be detected by a gamma-camera, PET-scan, MRI or other in vivo diagnostic techniques and after appropriate time, clear the blood from non-target bound targeting molecule by passing the blood through a biotin-binding device and at appropriate time administer avidin/SA carrying a cell killing radionuclide/ cytotoxic agent which is later cleared from the blood circulation by passing the blood through a avidin/streptavidin binding device which has been produced by passing a solution containing the reagent according to the present invention, e.g. biotin dimers or reference trimers through the biotin-binding device.

### Example 6

### Application of a conditioned column to improve immunotargeting in a three step procedure

To improve immunotargeting in a three-step procedure by in the first step providing means of efficiently clearing the blood circulation from biotinylated targeting molecules by passing the blood through a biotin-binding device and in a second step clearing the blood from administered avidin/SA, by passing the blood through an avidin/streptavidin binding device which has been produced by passing a solution containing the reagent according to the present invention, biotin dimers or reference trimers through the biotin-binding device and in a third step clearing the blood from molecules containing biotin and a radionuclide/ cytotoxic moiety by passing the blood through a biotin-binding device.

## Claims

1. A method for the conditioning of an avidin or streptavidin containing column matrix in an extracorporeal device for the extraction of toxic material from mammalian blood in connection with diagnosis or treatment of a mammalian condition or disease, wherein a solution containing a reagent or a mixture of reagents for treatment of blood carrying different toxic binding moieties, said reagent(s) being represented by the general formula: 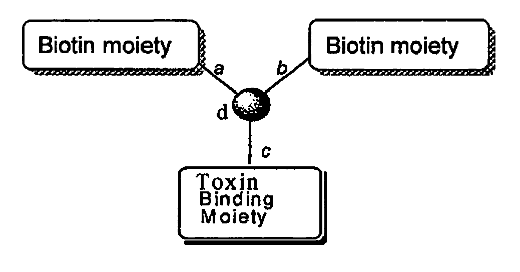 wherein the biotin moieties represent natural biotin or derivatives thereof chosen from the group comprising norbiotin, homobiotin, oxybiotin, iminobiotin, desthiobiotin, diaminobiotin, biotin sulfoxide, and biotin sulfone,
wherein a, b, and c are linkers, which are same or different and which are linear or branched chained and contain water solubilizing functionalities chosen from the group consisting of ether or thioether bonds or amines in the chain or side groups containing amines, carboxylates or hydroxyl functionalities, wherein the two biotin moieties are coupled to the linker molecules a and b through the biotin carboxylate via an amide bond,
wherein d is a trifunctional crosslinking moiety and is an 1,3,5-substituted aromatic compound containing functional groups that are nucleophiles or are reactive with nucleophiles, wherein the biotin moieties are coupled to the trifunctional cross-linking moiety through linkers a and b that provide a minimum of 20Å and a miximum of 60Å between the biotin moiety carboxylate carbon atoms when measured in a fully linearized form, and
wherein said toxic binding moiety is chosen from the group consisting of monoclonal antibodies including fragments or engineered counterparts thereof, aptamers, peptides, oligodeoxynuclotides, including binding fragments thereof, intercalation reagents including dyes, chemotherapy agents and natural substances, and metal chelates that specifically bind with toxic material with or without an effector molecule or to an effector molecule attached to the toxic material,
is passed through said device, wherein one or more of said reagents are bound to the device and wherein said device thereby is converted from a biotin binding device to a toxic material binding device,
wherein the two biotin moieties are bound to one and the same (strept)avidin molecule.

2. The method according to claim 1, wherein said trifunctional cross-linking moiety is a derivative of 1,3,5-benzene tricarboxylic acid, 3,5-diaminobenzoic acid, or 5-amino-1,3-dicarboxybenzene.

3. The method according to claim 1, wherein at least one of the linkers a, b, and c comprises side groups containing amines, carboxylates or hydroxyl groups.

4. The method according to claim 1, wherein one or both of the linkers a and b contain(s) a methyl, hydroxymethylene, or carboxylate functionality on the atom of the linker alpha to the biotinamide bond to provide stability from biotinidase.

5. The method according to claim 1, wherein the toxin binding moiety has the ability to bind with high affinity to a toxic material selected from the group comprising metal ions, chemotherapy agents, free radionuclides, radionuclides bound to other compounds, ingested toxins, toxins produced by bacteria, toxins produced by viral infections, toxins produced by disease states, diseased cells, cells involved in the immune response, anti-blood group antibodies, anti-HLA antibodies, anti-xenoantibodies, TNF and cytokinins.

6. The method according to claim 5, wherein said toxins produced by bacteria are endotoxins or entero-toxins.

7. The method according to claim 5, wherein the toxin binding moiety has the ability to bind to TNF and cytokinins.

8. The method according to claim 1, wherein the effector molecule is a radionuclide, a cytotoxic agent, a chelating agent for binding of radionuclides, a chemotherapy agent, a natural toxin or a derivative thereof, or a synthetic toxin.

9. The method according to any one of the preceeding claims, wherein the toxin binding moiety in each reagent is bound to

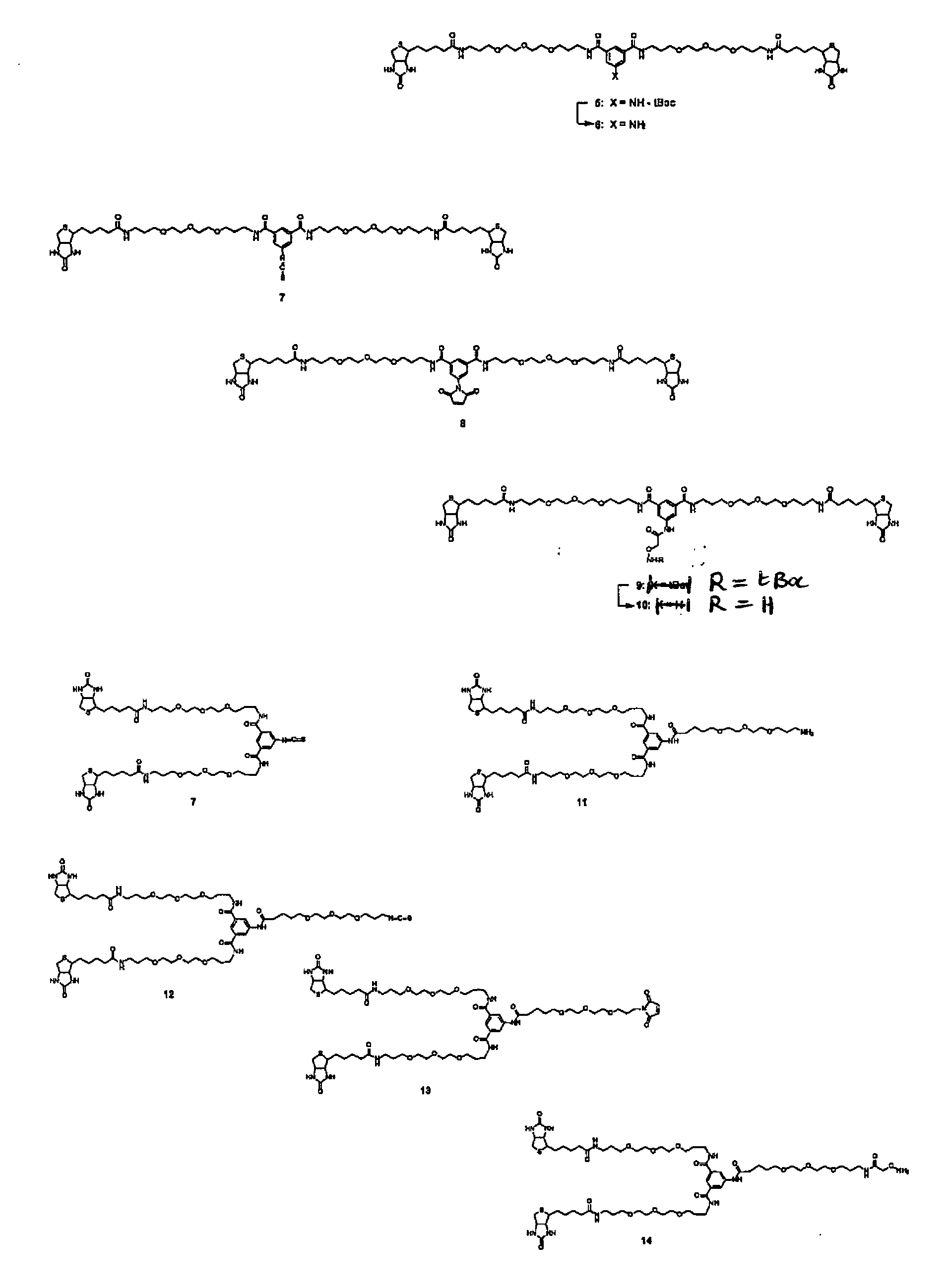

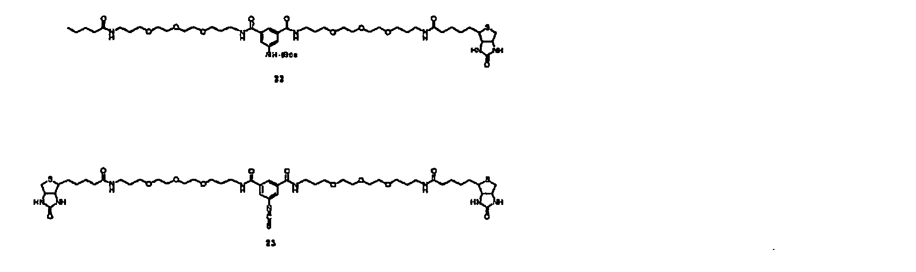

10. The method according to any one of the preceeding claims, wherein said solution contains a mixture of reagents for treatment of blood carrying different specific toxin binding moieties, wherein a multifunctional device is produced.

11. The method according to claim 10, wherein said reagents used for conditioning for blood clearance prior to organ or cell transplantation contain different toxin binding moieties directed to anti-HLA antibodies, anti-blood group antibodies or anti-xenoantibodies.

12. The method according to claim 10, wherein the conditioning is tailor-made for the patient prior to treatment by using a suitable mixture of reagents carrying different specific toxin binding moieties directed towards specific sub-types of anti-HLA-antibodies.

13. The method according to claim 10, wherein said reagents are contained in infusion bags prior to conditioning.

14. The method according to claim 10, wherein the passing of said reagents carrying different specific toxin binding moieties directed to specific sub-types through said extracorporeal device occurs in a hospital by connecting said infusion bags containing said reagents to a monitoring unit used for extracorporeal treatment, and wherein the conditioning is achieved manually or automatically by said monitoring unit.

15. The method according to claim 14, wherein the monitoring unit is a reprogrammed dialysis machine.

16. An extracorporeal device containing a column matrix for the extraction of toxic material from mammalian blood in connection with diagnosis or treatment of a mammalian condition or disease, wherein said column matrix comprises avidin or streptavidin bound to a reagent or a mixture of reagents for treatment of blood as specified in any one of claims 1-15.

17. The extracorporeal device according to claim 16, wherein a mixture of reagents are bound to said column matrix and said reagents carry different specific binding moieties directed to anti-HLA antibodies, anti-blood group antibodies or anti-xenoantibodies.

## Patentansprüche

1. Verfahren zum Konditionieren einer Avidin oder Stretavidin enthaltenden Säulenmatrix in einer Vorrichtung außerhalb des Körpers zur Extraktion von toxischem Material aus dem Blut von Säugetieren oder Menschen in Verbindung mit der Diagnose oder Behandlung eines Zustands oder einer Erkrankung bei Säugetieren oder Menschen, wobei eine Lösung, welche ein Reagenz oder ein Reagenziengemisch zur Behandlung von Blut enthält, welches verschiedene toxinbindende Komponenten trägt, wobei das Reagenz (die Reagenzien) durch die folgende allgemeine Formel dargestellt werden kann (können): 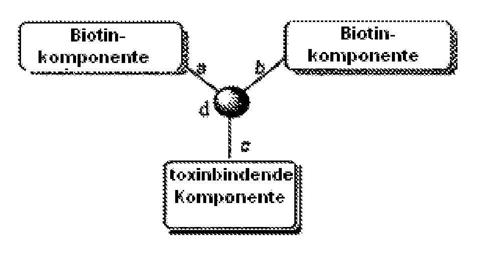 wobei es sich bei den Biotinkomponenten um natürliches Biotin oder Derivate davon handelt, die aus der Gruppe ausgewählt sind, die Norbiotin, Homobiotin, Oxybiotin, Iminobiotin, Desthiobiotin, Diaminobiotin, Biotinsulfoxid und Biotinsulfon umfasst,
wobei a, b und c für Verbindungseinheiten stehen, welche dieselben oder unterschiedliche sind und welche lineare oder verzweigte Ketten aufweisen und wasserlöslichkeitsvermittelnde Funktionalitäten enthalten, die aus der Gruppe ausgewählt sind, die aus Ether- oder Thioetherbindungen, Aminen in der Kette, Seitengruppen, welche Amine enthalten, Carboxylaten und Hydroxylfunktionalitäten besteht, wobei die beiden Biotinkomponenten über das Biotincarboxylat über eine Amidbindung mit den Verbindungsmolekülen a und b verbunden sind,
wobei d für eine trifunktionelle Vernetzungskomponente und eine 1,3,5-substituierte aromatische Verbindung steht, welche funktionelle Gruppen enthält, die nukleophil sind oder mit Nukleophilen reaktiv sind, wobei die Biotinkomponenten über Verbindungseinheiten a und b mit der trifunktionellen Vernetzungskomponente verbunden sind, welche für einen minimalen Abstand von 20 Å und für einen maximalen Abstand von 60 Å zwischen den Carboxylat-Kohlenstoffatomen der Biotinkomponente sorgen, gemessen in voll linearisierter Form, und
wobei die toxinbindende Komponente aus der Gruppe ausgewählt ist, die aus monoklonalen Antikörpern, einschließlich Fragmenten oder technisch hergestellter Analoga derselben, Aptameren, Peptiden, Oligodesoxynucleotiden, einschließlich Bindungsfragmenten derselben, Intercalationsreagenzien, einschließlich Farbstoffen, Chemotherapeutika, natürlichen Substanzen und Metallchelaten besteht, die spezifisch an toxisches Material mit oder ohne Effektormolekül oder an ein Effektormolekül binden, welches an das toxische Material gebunden ist,
durch die Vorrichtung geleitet wird, wobei eines oder mehrere der Reagenzien an die Vorrichtung gebunden werden, wobei die Vorrichtung **dadurch** von einer Vorrichtung, die Biotin bindet, in eine Vorrichtung, die toxisches Material bindet, umgewandelt wird,
wobei die beiden Biotinkomponenten an ein und dasselbe (Strept)Avidin-Molekül gebunden werden.

2. Verfahren nach Anspruch 1, wobei es sich bei der trifunktionellen Vernetzungskomponente um ein Derivat der 1,3,5-Benzoltricarbonsäure, der 3,5-Diaminobenzoesäure oder des 5-Amino-1,3-dicarboxybenzols handelt.

3. Verfahren nach Anspruch 1, wobei mindestens eine der Verbindungseinheiten a, b und c Seitengruppen umfasst, welche Amine, Carboxylate oder Hydroxygruppen enthalten.

4. Verfahren nach Anspruch 1, wobei eine oder beide der Verbindungseinheiten a und b an dem Atom in Alphastellung zu der Biotinamidbindung eine Methyl-, Hydroxymethylen- oder Carboxylatfunktionalität enthält (enthalten), um für Stabilität gegen Biotinidase zu sorgen.

5. Verfahren nach Anspruch 1, wobei die toxinbindende Komponente die Fähigkeit aufweist, mit hoher Affinität an ein toxisches Material zu binden, welches aus der Gruppe ausgewählt ist, die Metallionen, Chemotherapeutika, freie Radionuklide, an andere Verbindungen gebundene Radionuklide, mit der Nahrung aufgenommene Toxine, durch Bakterien erzeugte Toxine, durch Virusinfektionen erzeugte Toxine, durch Erkrankungszustände erzeugte Toxine, erkrankte Zellen, an der Immunreaktion beteiligte Zellen, Anti-Blutgrupp-Antikörper, Anti-HLA-Antikörper, Anti-Xenoantikörper, TNF und Zytokinine umfasst.

6. Verfahren nach Anspruch 5, wobei es sich bei den durch Bakterien erzeugten Toxinen um Endotoxine oder Enterotoxine handelt.

7. Verfahren nach Anspruch 5, wobei die toxinbindende Komponente die Fähigkeit aufweist, an TNF und Zytokinine zu binden.

8. Verfahren nach Anspruch 1, wobei es sich bei dem Effektormolekül um ein Radionuklid, ein zytotoxisches Mittel, einen Chelatbildner zum Binden von Radionukliden, ein Chemotherapeutikum, ein natürliches Toxin oder ein Derivat davon oder um ein synthetisches Toxin handelt.

9. Verfahren nach einem der vorhergehenden Ansprüche, wobei die toxinbindende Komponente in jedem Reagenz an das Folgende gebunden ist:

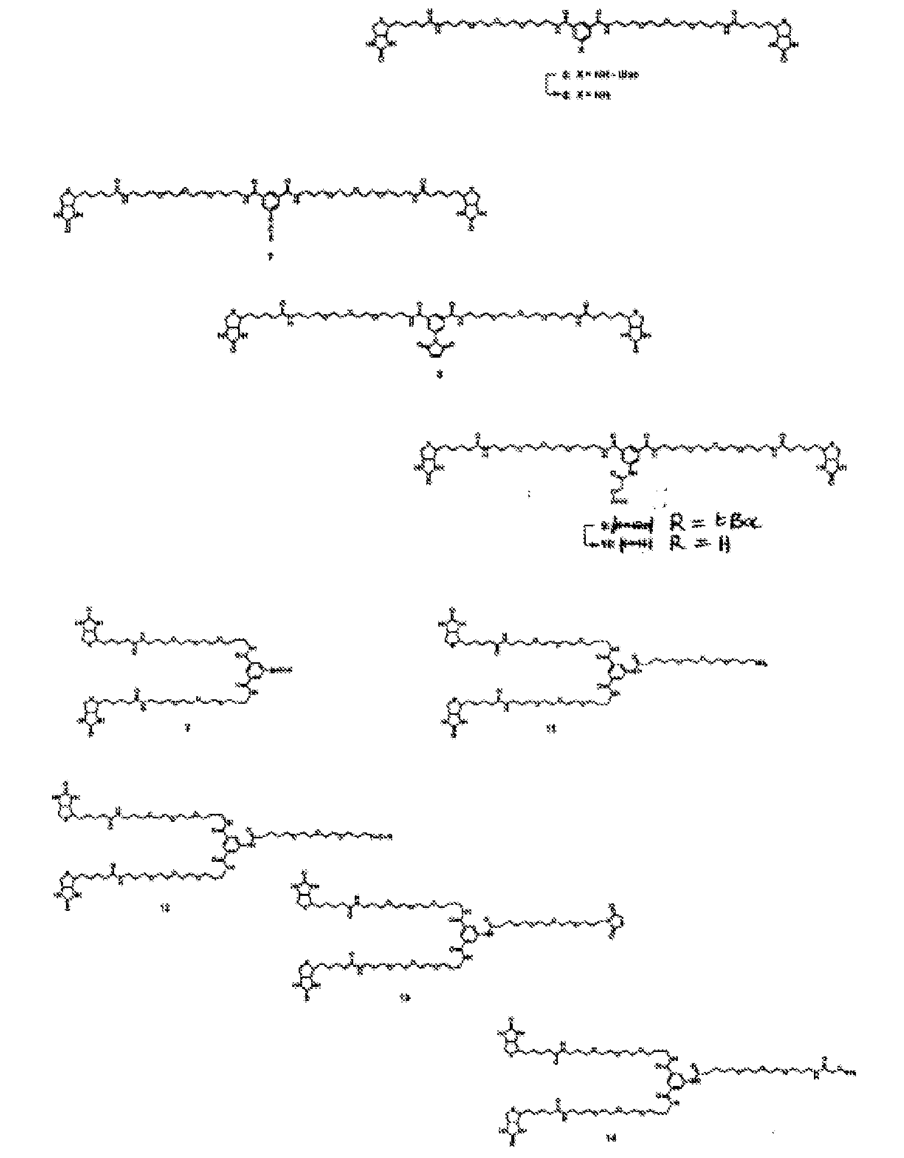

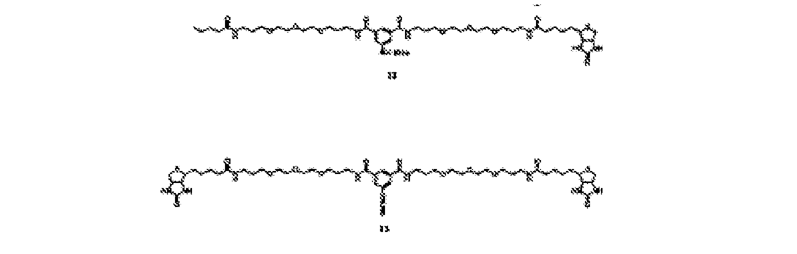

10. Verfahren nach einem der vorhergehenden Ansprüche, wobei die Lösung ein Reagenziengemisch zur Behandlung von Blut enthält, welches verschiedene spezifische toxinbindende Komponenten trägt, wobei eine multifunktionelle Vorrichtung hergestellt wird.

11. Verfahren nach Anspruch 10, wobei die Reagenzien, die zum Konditionieren für eine Blutreinigung vor einer Organ- oder Zelltransplantation verwendet werden, verschiedene toxinbindende Komponenten enthalten, die sich gegen Anti-HLA-Antikörper, Anti-Blutgrupp-Antikörper oder Anti-Xenoantikörper richten.

12. Verfahren nach Anspruch 10, wobei die Konditionierung vor der Behandlung auf den Patienten zugeschnitten wird, indem ein geeignetes Gemisch von Reagenzien verwendet wird, welche verschiedene spezifische toxinbindende Komponenten aufweisen, welche sich gegen spezielle Untertypen von anti-HLA-Antikörpern richten.

13. Verfahren nach Anspruch 10, wobei die Reagenzien vor der Konditionierung in Infusionsbeuteln enthalten sind.

14. Verfahren nach Anspruch 10, wobei die Reagenzien, welche verschiedene spezifische toxinbindende Komponenten aufweisen, die sich gegen spezielle Untertypen richten, in einem Krankenhaus durch die extrakorporale Vorrichtung geleitet werden, indem die Infusionsbeutel, welche die Reagenzien enthalten, mit einer Überwachungseinheit verbunden werden, die für die extrakorporale Behandlung benutzt wird, und wobei die Konditionierung manuell oder automatisch durch die Überwachungseinheit geschieht.

15. Verfahren nach Anspruch 14, wobei es sich bei der Überwachungseinheit um ein umprogrammiertes Dialysegerät handelt.

16. Extrakorporale Vorrichtung, welche eine Säulenmatrix zur Extraktion von toxischem Material aus dem Blut von Säugetieren oder Menschen in Verbindung mit der Diagnose oder Behandlung eines Zustands oder einer Erkrankung bei Säugetieren oder Menschen enthält, wobei die Säulenmatrix Avidin oder Streptavidin umfasst, welches an ein Reagenz oder ein Reagenziengemisch zur Behandlung von Blut gemäß einem der Ansprüche 1 bis 15 gebunden ist.

17. Extrakorporale Vorrichtung nach Anspruch 16, wobei ein Reagenziengemisch an die Säulenmatrix gebunden ist und die Reagenzien verschiedene spezifische bindende Komponenten aufweisen, die sich gegen Anti-HLA-Antikörper, Anti-Blutgrupp-Antikörper oder Anti-Xenoantikörper richten.

## Revendications

1. Procédé de conditionnement d'une matrice de colonne contenant de l'avidine ou de la streptavidine dans un dispositif extracorporel pour l'extraction d'une substance toxique du sang d'un mammifère dans le cadre du diagnostic ou du traitement d'une condition ou d'une maladie chez le mammifère, dans lequel une solution contient un réactif ou un mélange de réactifs pour le traitement du sang portant différentes fractions de liaison aux toxines, ledit (lesdits) réactif(s) étant représenté(s) par la formule générale : 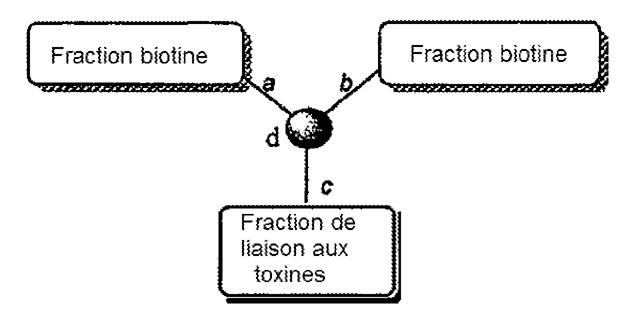 dans laquelle les fractions biotines représentent la biotine naturelle ou ses dérivés choisis dans le groupe comprenant la norbiotine, l'homobiotine, l'oxybiotine, l'iminobiotine, la desthiobiotine, la diaminobiotine, le sulfoxyde de biotine, et la biotine sulfone,
dans laquelle a, b, et c sont des lieurs, qui sont identiques ou différents et qui sont à chaîne linéaire ou ramifiée et contiennent des fonctionnalités hydrosolubles choisies dans le groupe constitué par les liaisons éther ou thioéther ou des amines dans la chaîne ou dans les groupes latéraux contenant des fonctionnalités amine, carboxylate ou hydroxyle, dans laquelle les deux fractions biotine sont couplées aux molécules de liaison a et b par le carboxylate de biotine via une liaison amide,
dans laquelle d est une fraction de réticulation trifonctionnelle et est un composé aromatique 1,3,5-substitué contenant des groupes fonctionnels qui sont des nucléophiles ou qui réagissent avec des nucléophiles, les fractions biotine étant couplées à la fraction de réticulation trifonctionnelle par les lieurs a et b qui fournissent un minimum de 20 Å et un maximum de 60 Å entre les atomes de carbone de la fraction carboxylate de biotine dans le cas d'une mesure sous une forme totalement linéarisée, et
dans laquelle ladite fraction de liaison aux toxines est choisie dans le groupe constitué par les anticorps monoclonaux comprenant des fragment ou des homologues modifiés de ceux-ci, des aptamères, des peptides, des oligodésoxynucléotides, y compris des fragments de liaison de ceux-ci, des réactifs d'intercalation comprenant des colorants, des agents chimiothérapeutiques et des substances naturelles, et des chélates de métaux qui se lient spécifiquement à une substance toxique avec ou sans molécule effectrice ou à une molécule effectrice liée à la substance toxique,
passe dans ledit dispositif, un ou plusieurs desdits réactifs étant liés au dispositif et ledit dispositif étant ainsi converti d'un dispositif de liaison à la biotine en un dispositif de liaison à une substance toxique,
les deux fractions biotine étant liées à une seule et même molécule de (strept)avidine.

2. Procédé selon la revendication 1, dans lequel ladite fraction de réticulation trifonctionnelle est un dérivé de l'acide 1,3,5-benzène tricarboxylique, de l'acide 3,5-diaminobenzoïque, ou de l'acide 5-amino-1,3-dicarboxybenzène.

3. Procédé selon la revendication 1, dans lequel au moins un des lieurs a, b, et c comprend des groupes latéraux contenant des groupes amine, carboxylate ou hydroxyle.

4. Procédé selon la revendication 1, dans lequel l'un des lieurs a et b ou les deux contient (contiennent) une fonctionnalité méthyle, hydroxyméthylène, ou carboxylate sur l'atome du lieur en position alpha par rapport à la liaison biotine-amide pour fournir la stabilité de la biotinidase.

5. Procédé selon la revendication 1, dans lequel la fraction de liaison aux toxines possède la capacité de se lier avec une grande affinité à une substance toxique choisie dans le groupe comprenant des ions métalliques, des agents chimiothérapeutiques, des radionucléides libres, des radionucléides liés à d'autres composés, des toxines ingérées, des toxines produites par des bactéries, des toxines produites par des infections virales, des toxines produites par des états pathologiques, des cellules malades, des cellules impliquées dans la réponse immunitaire, des anticorps anti-groupe sanguin, des anticorps anti-HLA, des anti-xénoanticorps, le TNF et des cytokinines.

6. Procédé selon la revendication 5, dans lequel lesdites toxines produites par des bactéries sont des endotoxines ou des entérotoxines.

7. Procédé selon la revendication 5, dans lequel la fraction de liaison aux toxines a la capacité de se lier au TNF et aux cytokinines.

8. Procédé selon la revendication 1, dans lequel la molécule effectrice est un radionucléide, un agent cytotoxique, un agent de chélation destiné à lier les radionucléides, un agent chimiothérapeutique, une toxine naturelle ou un dérivé de celle-ci, ou une toxine synthétique.

9. Procédé selon l'une quelconque des revendications précédentes, dans lequel la fraction de liaison aux toxines dans chaque réactif est liée à

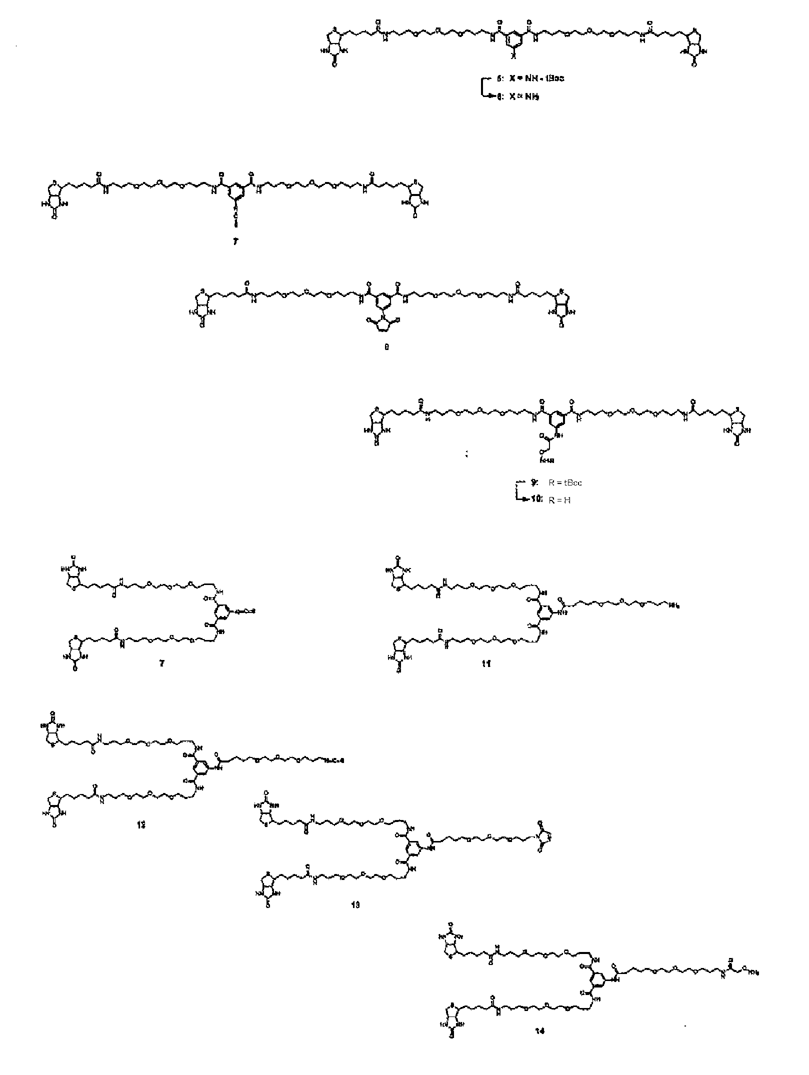

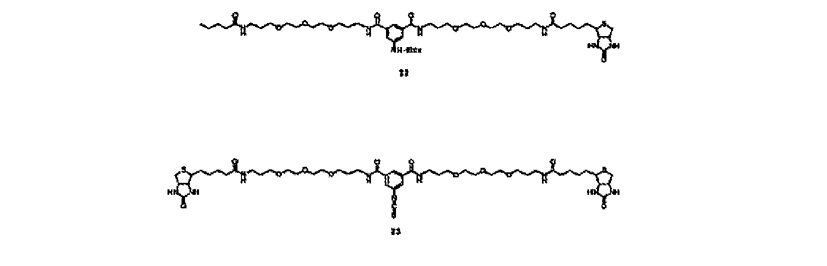

10. Procédé selon l'une quelconque des revendications précédentes, dans lequel ladite solution contient un mélange de réactifs pour le traitement du sang portant différentes fractions de liaison aux toxines spécifiques, dans lequel un dispositif multifonctionnel est produit.

11. Procédé selon la revendication 10, dans lequel lesdits réactifs utilisés pour le conditionnement de la clairance du sang avant la transplantation de l'organe ou des cellules contiennent différentes fractions de liaison aux toxines dirigées contre des anticorps anti-HLA, des anticorps anti-groupe sanguin ou des anti-xénoanticorps.

12. Procédé selon la revendication 10, dans lequel le conditionnement est personnalisé pour le patient avant le traitement en utilisant un mélange adapté de réactifs portant différentes fractions de liaison aux toxines spécifiques dirigées contre des sous-types d'anticorps anti-HLA.

13. Procédé selon la revendication 10, dans lequel lesdits réactifs sont contenus dans des poches de perfusion avant le conditionnement.

14. Procédé selon la revendication 10, dans lequel le passage desdits réactifs portant différentes fractions de liaison aux toxines spécifiques dirigées contre des sous-types spécifiques dans ledit dispositif extracorporel a lieu dans un hôpital par connexion desdites poches de perfusion contenant lesdits réactifs à une unité de surveillance utilisée pour le traitement extracorporel, et dans lequel le conditionnement est réalisé manuellement ou automatiquement par ladite unité de surveillance.

15. Procédé selon la revendication 14, dans lequel l'unité de surveillance est une machine de dialyse reprogrammée.

16. Dispositif extracorporel contenant une matrice de colonne pour l'extraction d'une substance toxique du sang d'un mammifère dans le cadre du diagnostic ou du traitement d'une condition ou d'une maladie chez le mammifère, dans lequel ladite matrice de colonne comprend de l'avidine ou de la streptavidine liée à un réactif ou à un mélange de réactifs destiné au traitement du sang selon l'une quelconque des revendications 1 à 15.

17. Dispositif extracorporel selon la revendication 16, dans lequel un mélange de réactifs est lié à ladite matrice de colonne et lesdits réactifs portent différentes fractions de liaison spécifiques dirigées contre des anticorps anti-HLA, des anticorps anti-groupe sanguin ou des anti-xénoanticorps.
